# EUROPEAN PATENT SPECIFICATION

(11) **EP 1 678 515 B1**
(45) Date of publication and mention of the grant of the patent: **20.06.2007**
(21) Application number: 04821539.6
(22) Date of filing: 28.10.2004
(51) Int. Cl.: G01S 1/04

(54) **SYSTEM FOR MITIGATING RADIATION EFFECTS ON COMPONENTRY IN SPACE**
SYSTEM ZUR LINDERUNG VON STRAHLUNGSEFFEKTEN AUF KOMPONENTEN IM RAUM
SYSTEME DESTINE A ATTENUER LES EFFETS DE RAYONNEMENTS SUR DES COMPOSANTS DANS L'ESPACE

(30) Priority: 30.10.2003 US 515426 P
(43) Date of publication of application: 12.07.2006
(73) Proprietor: Honeywell International Inc., Morristown, New Jersey 07960 (US)
(72) Inventor: GREEN, Charles, Palm Harbor, FL 34683 (US); ALLEN, Craig, Clearwater, FL 33767 (US); LINTZ, John, Palm Harbor, FL 34683 (US)
(74) Representative: Haley, Stephen
(86) International application number: PCT/US2004/035743
(87) International publication number: WO 2005/083459

(56) References cited:
- US-A- 5 280 228
- HAAS L ET AL: "The Ashtech G12-HDMA: A Low Cost, High Performance GPS Space Receiver" PROCEEDINGS OF THE INSTITUTE OF NAVIGATION (ION) GPS, [Online] 19 September 2000 (2000-09-19), pages 350-354, XP002341440 Retrieved from the Internet: URL:http://products.thalesnavigation.com/a ssets/techpapers/17_G12HDMA_LowCost.pdf> [retrieved on 2005-08-18]
- UNWIN M ET AL: "The Design and Operation of a COTS Space GPS Receiver" AAS 00-046, ADVANCES IN THE ASTRONAUTICAL SCIENCES, GUIDANCE AND CONTROL 2000, [Online] 2000, page 465, XP002341439 Retrieved from the Internet: URL:http://www.estec.esa.nl/conferences/FP D/info/cotsgps.pdf> [retrieved on 2005-08-18]

## Description

### BACKGROUND

### Field of the Invention

Embodiments of the present invention relate to radiation mitigation systems and methods. More particularly, embodiments of the present invention relate to systems and methods for mitigating harmful effects of radiation on electronic components, and, in particular, Global Positioning System (GPS) receivers, deployed in space.

### Background of the Invention

The Global Positioning System (GPS) is actually a constellation of 27 Earth-orbiting satellites (24 in operation and three extras in case one fails). The U.S. military developed and implemented this satellite network as a military navigation system and later opened it for commercial use.

A GPS receiver's job is to locate four or more of these satellites, determine the distance to each, and use this information to deduce its own location by triangulation. However, one problem with conventional, "off-the-shelf" GPS receivers and other electronic components that are deployed in space, is exposure to natural space radiation. The solar environment includes galactic cosmic rays, solar enhanced particles and energetic protons and neutrons, that the self embedded receivers were not designed to handle. Cosmic particles, trapped protons and solar flares each may cause single event effects (SEE), such as a single event upset (SEU) or a single event latch (SEL).

A SEU is the result of naturally occurring cosmic rays, trapped protons and solar energetic particles. The SEU causes soft errors generated within logic. Typically, the errors are associated with memory bit and storage elements. Undetected errors can propagate through the system, causing a loss of functionality.

In contrast, with a SEL, an energetic particle turns on parasitic elements in an electronic component resulting in a high current path. The increased current draw may lead the receiver to become inoperable, although it is possible for it to occur without an immediate loss in functionality. Continued use in a high-current state can lead to degraded reliability and induce burnout, a catastrophic failure. Because the SEL error is self-sustaining, recovery after a SEL is only possible through removal of power supply. Further, because the current drawn by a GPS receiver varies with temperature, simply measuring the current drawn is too imprecise to effectively detect an SEL error.

One option for preventing a SEE is to use radiation-hardened componentry. Radiation-hardened componentry helps shield electronic components from the effects of radiation. However, such specially designed and built componentry is expensive and consumes more power. Therefore, it would be desirable to employ as much non-radiation tolerant componentry as possible in space deployment that can be reset or reinitialized as needed to mitigate radiation environment single event effects.
A method for detecting and preventing SEE by current limiting a GPS receiver is known from the article by L. Haas et al: "The Ashtech G12-HDMA: A Low Cost, High Performance GPS Space Receiver" published in the Proceedings of the ION GPS, September 2000.

### BRIEF SUMMARY OF THE INVENTION

Before one or more embodiments of the invention are described in detail, one skilled in the art will appreciate that the invention is not limited in its application to the details of construction, the arrangements of components, and the arrangement of steps set forth in the following detailed description or illustrated in the drawings. The invention is capable of other embodiments and of being practiced or being carried out in various ways. Also, it is to be understood that the phraseology and terminology used herein is for the purpose of description and should not be regarded as limiting.

The present invention relates to a method for mitigating harmful radiation effects on an electrical component. The method comprises supplying interruptible power to the electrical component and monitoring the power value drawn by the at least one electrical component. The power value is adjusted by an offset value according to an operating temperature. The power value that has been adjusted is compared with a threshold value to determine an overcurrent condition. When an overcurrent condition exists, power to the electrical component is interrupted. The power to the electrical component is resupplied after a predetermined period of time so that the electrical component resumes drawing current at a normal level.

In another embodiment, communication between the at least one component and another component is monitored to determine whether there has been an absence of communication between the components for a predetermined period of time. If there is such an absence, then it may be deduced that the at least one component has experienced an SEU. The power to the at least one component can then be "strobed" such that the at least one component is restarted and placed back into its normal operational state.

### BRIEF DESCRIPTION OF THE DRAWINGS

Figure 1 is a schematic diagram of a system for mitigating radiation effect according to a first preferred embodiment of the present invention.

Figure 2 is a schematic diagram of overcurrent detector 120 incorporated in a GPS system according to a preferred embodiment of the present invention.

Figure 3 is a schematic diagram of power module 130 according to a preferred embodiment of the present invention.

Figure 4 is a schematic diagram of a system for mitigating radiation effect according to a second preferred embodiment of the present invention.

Figure 5 is a schematic diagram of a system for mitigating radiation effect according to a third preferred embodiment of the present invention.

### DETAILED DESCRIPTION OF THE INVENTION

Mitigation of harmful radiation effects may be accomplished, in accordance with the present invention, by adding circuitry at the system or Line Replacement Unit (LRU) level to circumvent the effect. Such circuitry can be triggered by detection systems designed to detect when an SEE has occurred.

Detection may occur, for example, by at least two methods. One of these two methods is to measure the current used by the GPS receiver while compensating for expected variations due to temperature. When current drawn by the GPS receiver is higher than expected during operation at a given temperature and/or consistent with what is expected for an SEU or SEL condition during operation at a given temperature for a predetermined period of time, an SEE condition is declared. A second method is to monitor communication between the GPS receiver and the LRU system processor. When communication ceases or falls below an acceptable level for a predetermined period of time, an SEE condition is declared. In a preferred embodiment, the first and second methods may be used in conjunction with one another.

With both methods, a power strobe is used to bring the GPS receiver back to normal function. The power strobe switches off power for a specific period of time to eliminate the SEE condition. After the power strobe is completed, initialization of the GPS receiver is necessary. This initialization preferably includes all data necessary to aid the GPS receiver in the attempt to reacquire GPS satellite vehicle data as quickly as possible. This may include, but is not limited to, an accurate estimate of the GPS receiver's state before the event occurred.

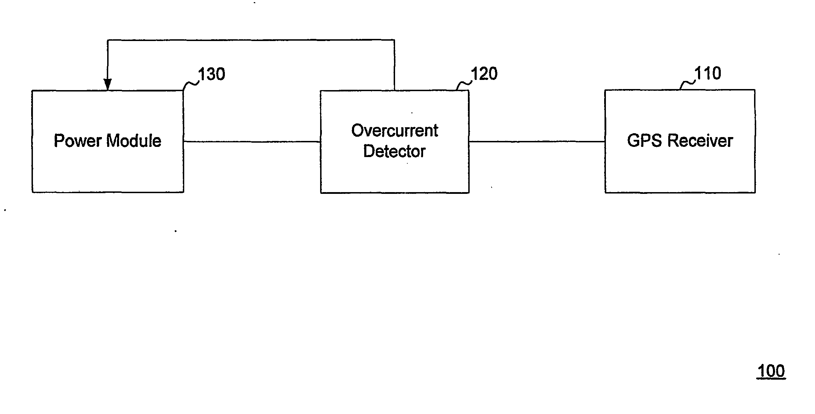

Figure 1 is a schematic diagram of a system for mitigating radiation effect according to a first preferred embodiment of the present invention. GPS system 100 includes a GPS receiver 110, an overcurrent detector 120, and a power module 130. In a preferred embodiment of the present invention, GPS receiver 110 is an embedded GPS receiver. However, GPS receiver 110 includes any electronic component or module that may become latched due to radiation. One of ordinary skill in the art will understand that other electronic componentry exposed to radiation also suffer the same effects of latching. Therefore, the use of GPS receiver 110 is only exemplary.

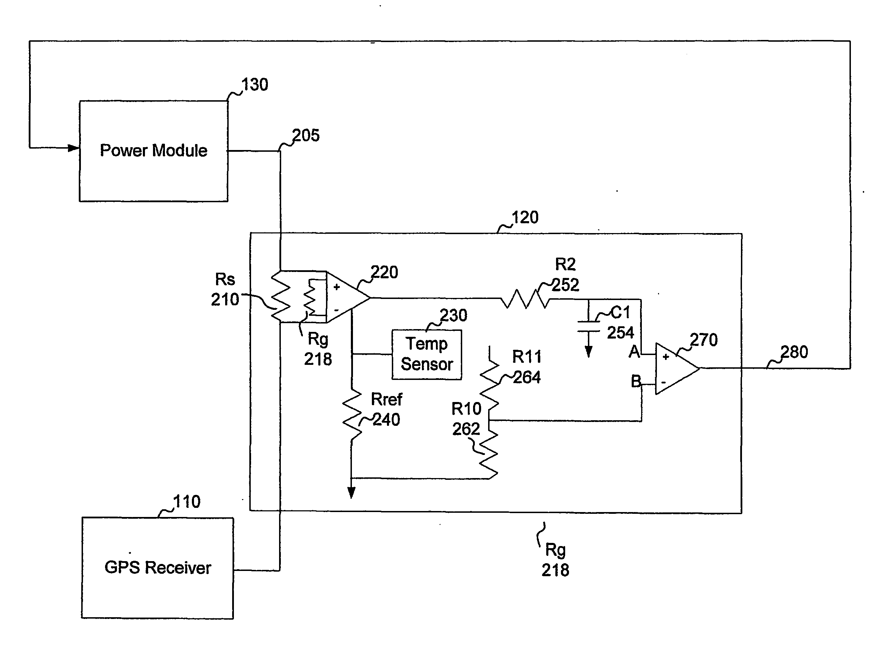

Overcurrent detector 120 interfaces between GPS receiver 110 and power module 130. Overcurrent detector 120 measures the current drawn by GPS receiver 110. Overcurrent detector 120 may be embodied in discrete or hybrid form, using packaged components or wire-bonding die within a package. Overcurrent detector 120, which is described in greater detail in reference to Figure 2, senses GPS receiver's 110 current demand independent of temperature and compares it to an expected value, creating a bipolar output indicating a latched state of GPS receiver 110.

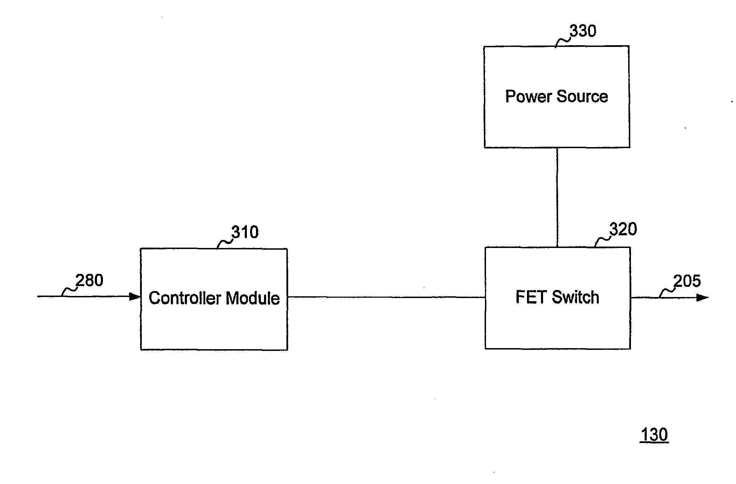

Power module 130 is a switched power supply that provides power to GPS receiver 110. Power module 130, which is described in greater detail in reference to Figure 3, is driven by the bipolar output received from overcurrent detector 120. If the current drawn by GPS receiver 100 indicates an SEE condition or latched state, power module 130 resets GPS receiver 110 by powering off the GPS receiver for a predetermined period of time. Particularly, power module 130 includes a switch for switching off power for a specific period of time to eliminate the SEE condition and a power strobe to bring GPS receiver 110 to normal function after the latched state has passed. Otherwise, if the bipolar output received from overcurrent detector 120 indicates a normal operation, power module 130 continues to supply power to GPS receiver 110.

Figure 2 is a schematic diagram of overcurrent detector 120 incorporated in a GPS system according to a preferred embodiment of the present invention. Overcurrent detector 120 includes a current sense resistor ("Rs") 210, a gain resistor ("Rg") 218, an instrumentation amplifier 220, a temperature sensor 230, a reference resistor ("Rref') 240, a resistor ("R2") 252, a capacitor ("C1") 254, a resistor ("R10") 262, a resistor ("R11") 264 and a comparator 270 all connected as shown.

Resistors 210, 218, 240, 250 and 262 are standard resistors commonly recognized in the art. In one exemplary embodiment of the present invention, resistors 210, 218, 240, 250 and 262 have resistances of .03kΩ, 2.1kΩ, 17.4kΩ, 10kΩ, 10kΩ and 4.99kΩ, respectively. However, one of ordinary skill in the art will recognize that the present invention is not limited to any one configuration. Various resistors having various values may be employed within the scope of the present invention.

Capacitor C1 254 may include any standard capacitor. In an exemplary embodiment of the invention, capacitor 254 has a capacitance of 0.1 µF. However, various capacitors having various capacitance values may be used in accordance with the present invention.

Capacitor C1254 and resistor R2 252 form a noise filter. The noise filter removes short-term variations from the current measurements. In this manner, the filter formed by C1 254 and R2 252 outputs a signal to comparator 270 that is indicative of a sufficiently long-term trend in the measured current demand. Although the noise filter shown as an exemplary embodiment in Figure 2 is a simple RC filter, other implementations of a noise filter are consistent with the present invention. For example, an RL filter or RLC circuit may be used as a noise filter. Alternatively, the RC filter itself may be more complicated.

Instrumentation amplifier 220 may be any conventional gain amplifier. In an exemplary embodiment, instrumentation amplifier 220 is an AD627B amplifier, configured to have a gain of 100. However, one of ordinary skill in the art will recognize that various amplifiers may be employed in the present invention. Instrumentation amplifier 220 amplifies the current sensed by sense resistor Rs 210 to produce an amplified sense current.

Temperature sensor 230 may be any conventional electrical temperature sensor. In an exemplary embodiment, temperature sensor is AD590, a two-terminal integrated circuit temperature transducer that produces an output current proportional to absolute temperature. For supply voltages between 4 V and 30 V the device acts as a high impedance, constant current regulator passing 1 µA/K. The AD590 operates in temperature sensing application below 150°C.

Temperature sensor 230 provides an offset amount to the amplified sensed current from instrumentation amplifier 220 in accordance with the temperature varying current demand of GPS receiver 110. This offset provides a nominally stable level relating to the current demand of GPS receiver 110, which is independent of temperature.

Comparator 270 may be any conventional voltage comparator. In an exemplary embodiment, comparator 270 is an LM211 comparator. However, one of ordinary skill in the art will recognize that various comparators may be employed in the present invention.

Comparator 270 compares voltages at node A and node B. Node B is set to an expected value or reference voltage. In a preferred embodiment, the expected value is 10 V (or an equivalent value in current). However, one of ordinary skill in the art would recognize that other values may be used as an expected value.

Further, the present invention is not limited to the resistor ratio method described above. Rather, the expected value could be provided by any type of voltage or current reference.

In contrast, node A receives a measured value that has been offset in accordance with temperature. By comparing the expected value with the measured value that is adjusted for temperature variations, comparator 270 determines the existence of a latched condition. In a normal operation, for example, the value at node A is less than the expected value. However, in a latched condition, node A receives a value greater than the expected value. One of ordinary skill in the art will recognize that various other configurations for indicating a latched state are within the scope of the present invention.

After comparing the expected value of node B to the measured value at node A, comparator 270 outputs a low or high signal, indicating which node has the higher value. In a preferred embodiment, comparator 270 outputs a high signal of 5 V when the measured value at node A is higher than the expected value at node B (indicating a latched condition) for a specified period of time and a low signal of 0 V when the measured value at node A is less than the expected value at node B (indicating normal operation).

More particularly, the noise filter formed by C1 254 and R2 252, as described above, provides some delay in the signal to avoid falsely detecting a noise spike as a latched condition. However, a controller module in power module 130 (discussed below with reference to Figure 3) also may be configured to respond to a latched condition after a specified period of time. In this manner, comparator 270 receives a signal that essentially has been filtered for noise so that the signal is indicative of a sufficiently long-term trend in the measured current demand.

The voltage supplied by comparator 270 is used to drive power module 130. More particularly, when comparator 270 emits a high output, such as 5 V, signaling a latched condition, power module 130 switches off power to GPS receiver 110 for a specified time period. At the end of the specified time period, GPS receiver 110 discharges, thereby removing the latched condition. Once the latched state is removed, power module 130 automatically resumes power supply to GPS receiver 110.

In contrast, when comparator 270 emits a low output, such as 0 V, power module 130 continues to supply power to GPS receiver 110 without interruption.

Figure 3 is a schematic diagram of power module 130 according to a preferred embodiment of the present invention. Power module 130 includes a controller module 310, an FET switch 320 and a power source 330. In a preferred embodiment of the present invention, control module 310 is a software module configured to perform the operations of opening and closing the FET switch. In an alternative, control module 310 may be implemented solely in hardware. Although not shown, power source 330 also preferable includes a power strobe to bring GPS receiver 420 to normal function after being powered off.

As described with reference to Figure 2, controller module 310 also may include software for responding to a latched condition only after the latched condition exists for a specified period of time. This specified time may be specified by a user configuring controller module 310. Thus, the controller module essentially may act as a noise filter to the signal to ensure that a spike in noise is not falsely identified as a latched condition.

After the power strobe is completed, initialization of GPS receiver 420 is necessary. This initialization preferably includes all data necessary to aid the GPS receiver in the attempt to reacquire GPS satellite vehicle data as quickly as possible. This may include, but is not limited to, an accurate estimate of the GPS receiver's state before the event occurred.

Power source 330 is a power source suitable for providing power to GPS receiver 110. In a preferred embodiment, power source 330 supplies 5 V of DC power. However, power source 330 is not limited to any particular power source.

When controller module 310 receives a high output, such as 5 V, from comparator 270, it instructs FET switch 320 to switch to open. When FET switch 320 is open, power cannot be received by GPS receiver 110 from power source 330. After a sufficient period of time has elapsed, controller module 310 instructs FET switch to close, thereby allowing power from power source 330 to resume to GPS receiver 110.

The following exemplary scenarios illustrate the present invention operating at -22 °C, 25 °C and 55 °C in both a normal state and in a latched state. These scenarios are exemplary only and do not constrict the present invention to any particular configuration. In one exemplary embodiment of the invention operating at -22°C in a normal state, GPS receiver 110 draws a current of 1.346 A. This current causes a voltage drop of 40.38 mV across sense resistor Rs 210, which is then amplified by instrumentation amplifier 220.

In each of the following exemplary embodiments, Rg 218 is set so that the gain of instrumentation amplifier 220 is 100.238. Because instrumentation amplifier 220 has a gain of 100.238, the voltage sensed by Rs 210 is 4.048 V after amplification.

The amplified sensed voltage then is adjusted by an offset to account for the temperature-varying current drawn by GPS receiver 110. More particularly, temperature sensor 220 passes approximately 1 µA/K, which causes a voltage drop or offset of 5.08 V across Rref at the temperature of-22 °C.

Adding the offset voltage of 5.08 V to the amplified sensed voltage of 4.048 V yields an actual or measured voltage of 9.128 V at node A of comparator 270. In contrast, in each of the exemplary scenarios described herein, node B is configured to have an expected value or input of 10 V, regardless of temperature or the existence of a latched condition.

Comparator 270 compares the voltage at node A with the expected value at node B. In this case, because the voltage at node A of 9.128 V is less than 10 V, comparator 270 returns a low output of 0 V to power module 130. Power module 130 recognizes the 0 V signal from comparator 270 as a signal indicating a normal operating state. Therefore, power module 130 continues normal operating conditions by supplying power to GPS receiver 110.

In another exemplary embodiment of the invention operating at +25 °C in a normal state, GPS receiver 110 emits or draws a current of 1.183 A. This current causes a voltage drop of 35.49 mV across sense resistor Rs 210, which is then amplified by instrumentation amplifier 220 to 3.557 V.

The amplified sensed voltage then is adjusted by an offset to account for the temperature-varying current drawn by GPS receiver 110. More particularly, temperature sensor 220 causes a voltage drop or offset of 5.658 V across Rref 240 for a temperature of+25 °C.

Adding the offset voltage of 5.658 V to the amplified sensed voltage of 3.557 V yields an actual or measured voltage of 9.215 V at node A of comparator 270. Because the voltage at node A is less than the expected value of 10 V at node B, comparator 270 returns a low output of 0 V to power module 130.

Power module 130 recognizes the 0 V signal from comparator 270 as a signal indicating a normal operating state. Therefore, power module 130 continues normal operating conditions by continuing to supply power to GPS receiver 110.

In another exemplary embodiment of the invention operating at +55 °C in a normal state, GPS receiver 110 emits or draws a current of 1.043 A. This current causes a voltage drop of 31.29 mV across sense resistor Rs 210, which is then amplified by instrumentation amplifier 220 to 3.136 V.

The amplified sensed voltage then is adjusted by an offset to account for the temperature-varying current drawn by GPS receiver 110. More particularly, temperature sensor 220 causes a voltage drop or offset of 6.026 V across Rref 240 for a temperature of +55 °C.

Adding the offset voltage of 6.026 V to the amplified sensed voltage of 3.136 V yields an actual or measured voltage of 9.16 V at node A of comparator 270. Because the voltage at node A is less than the expected value of 10 V at node B, comparator 270 returns a low output of 0 V to power module 130.

Power module 130 recognizes the 0 V signal from comparator 270 as a signal indicating a normal operating state. Therefore, power module 130 continues normal operating conditions by continuing to supply power to GPS receiver 110.

The next three scenarios compare the operation of the present invention at temperatures of-22 °C, +25 °C and +55 °C in a latched state. In a latched state, GPS receiver 110 draws approximately an additional 400 pA of current for a given temperature.

Thus, in one exemplary embodiment of the invention operating at -22 °C in a latched state, GPS receiver 110 draws a current of 1.746 A. This current causes a voltage drop of 52.38 mV across sense resistor Rs 210, which is then amplified by instrumentation amplifier 220 to 5.25 V.

As described above, the voltage drop across Rref 240 at 22 °C is 5.08 V.

Thus, adding the offset voltage of 5.08 V to the amplified sensed voltage of 5.25 V yields an actual or measured voltage the voltage at the positive node A of comparator 270 of 10.33 V. Because the voltage at node A exceeds 10 V, comparator 270 returns a high output of 5 V to power module 130.

Power module 130 recognizes the 5 V signal from comparator 270 as a signal indicating a latched state. Therefore, power module 130 cuts off power to GPS receiver 110 to remove the latched condition.

In another exemplary embodiment of the invention operating at +25 °C in a latched state, GPS receiver 110 draws a current of 1.583 A. This current causes a voltage drop of 47.49 mV across sense resistor Rs 210, which is then amplified by instrumentation amplifier 220 to 4.76 V.

As described above, the voltage drop across Rref 240 at +25 °C is 5.658 V.

Thus, adding the offset voltage of 5.658 V to the amplified sensed voltage of 4.76 V yields an actual or measured voltage at the positive node A of comparator 270 of 10.418 V. Because the voltage at node A exceeds 10 V, comparator 270 returns a high output of 5 V to power module 130.

Power module 130 recognizes the 5 V signal from comparator 270 as a signal indicating a latched state. Therefore, power module 130 cuts off power to GPS receiver 110 to remove the latched condition.

In another exemplary embodiment of the invention operating at +55 °C in a latched state, GPS receiver 110 draws a current of 1.443A. This current causes a voltage drop of 43.29 mV across sense resistor Rs 210, which is then amplified by instrumentation amplifier 220 to 4.339 V.

As described above, the voltage drop across Rref240 at -22°C is 6.026 V.

Thus, adding the offset voltage of 6.026 V to the amplified sensed voltage of 4.339 V yields an actual or measured voltage the voltage at the positive node A of comparator 270 of 10.365 V. Because the voltage at node A exceeds 10 V, comparator 270 returns a high output of 5 V to power module 130.

Power module 130 recognizes the 5 V signal from comparator 270 as a signal indicating a latched state. Therefore, power module 130 cuts off power to GPS receiver 110 to remove the latched condition.

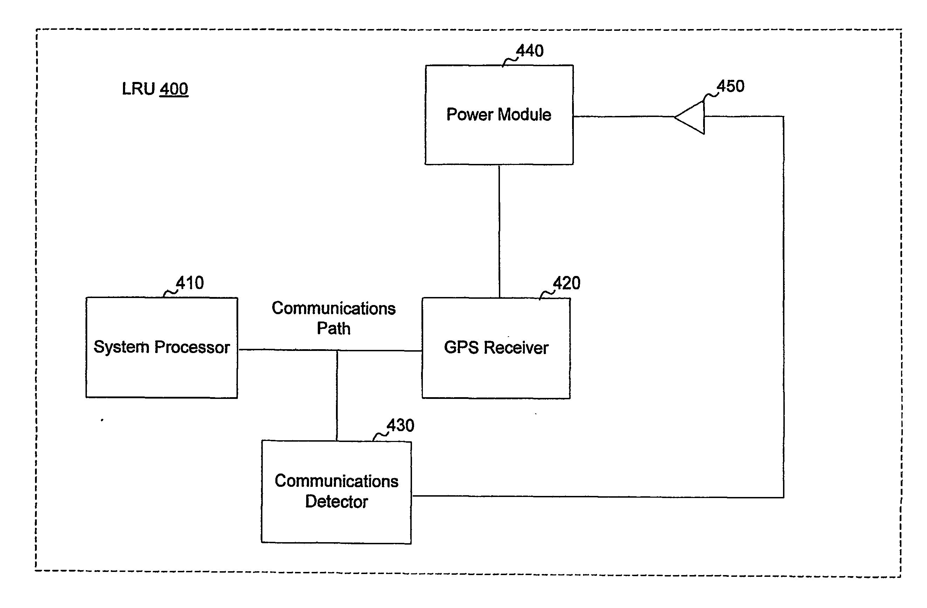

Figure 4 is a schematic diagram of a system for mitigating radiation effect according to a second preferred embodiment of the present invention. Line replaceable unit ("LRU") 400 is a line replaceable unit. An LRU is a sealed piece of replaceable equipment used for complex engineered systems, such as a GPS system. An LRU may hasten repair time, because it may be replaced quickly, restoring the overall system to service. It also may reduce the cost of systems and increase the quality by spreading development costs of the type of unit over different models of systems.

Here, LRU 400 includes a system processor 410, a GPS receiver 420, a communications detector 430, a power supply 440 and a power strobe 450. System processor 410 is a system processor for processing communications in a GPS system. For example, system processor 410 may execute the software that forms controller module 310 as well as other communications software.

Communications detector 430 includes circuitry that interfaces between GPS receiver 420 and power supply 440. Communications detector 430 monitors communication between GPS receiver 420 and system processor 410. If communications detector 430 notices a lack of communication between GPS receiver 420 and system processor 410 for a predetermined period of time, it sends an indication of a latched state to power module 440. If communications between GPS receiver 420 and system processor 410 appear normal, communications detector 430 sends an indication of a normal state to power module 440.

When power module 440 receives a value from communications detector 430 that is indicative of a normal state operation, it continues normal operations by continuing to supply power to GPS receiver 420. In contrast, when power module 440 receives a value from communications detector 430 that is indicative of a latched state, it switches off power to GPS receiver 420 for a specified period of time to remove the latched condition. For example, as described above, a switch may be switched within power module 440 to shut off power to GPS receiver 420. When the specified period of time to remove the latched state has passed, power strobe 450 is used to bring GPS receiver 420 to normal function.

After the power strobe is completed, initialization of GPS receiver 420 is necessary. This initialization preferably includes all data necessary to aid the GPS receiver in the attempt to reacquire GPS satellite vehicle data as quickly as possible. This may include, but is not limited to, an accurate estimate of the GPS receiver's state before the event occurred.

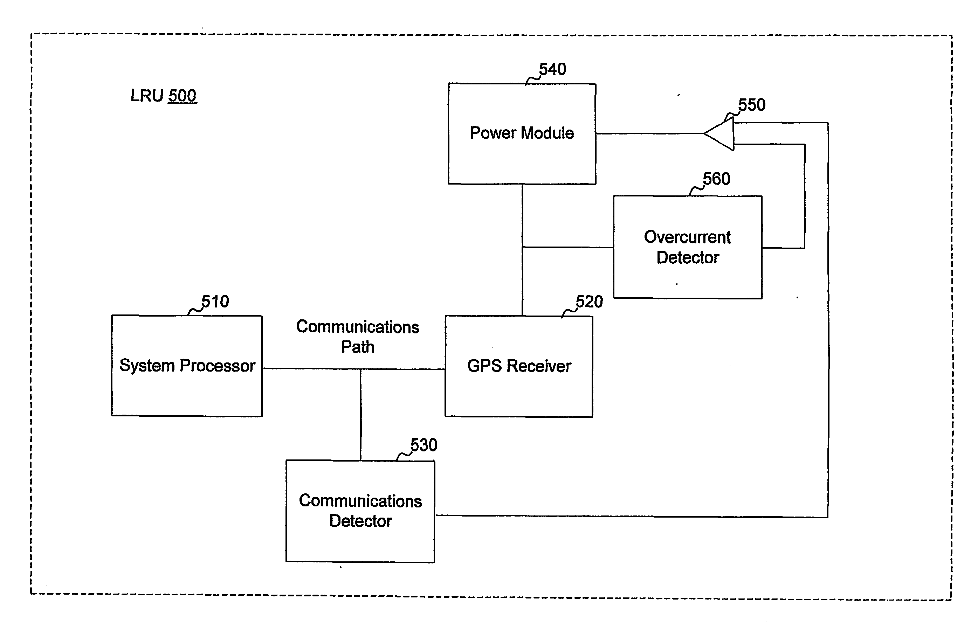

Figure 5 is a schematic diagram of a system for mitigating radiation effects according to a third preferred embodiment of the present invention. LRU 500 combines features of the first and second embodiments previously described. More particularly, LRU 500 determines whether a latched condition has occurred using a communications detector 530 and an overcurrent detector 560. Communications detector 530 operates in the same manner described above with reference to communications detector 430 in Figure 4. Likewise, overcurrent detector 560 operates in the same manner described above with reference to overcurrent detector 120 in Figure 1.

If communications detector 530 detects a lack of communications between system processor 510 and GPS receiver 520 or if overcurrent detector 560 detects an excessive amount of current being drawn by GPS receiver 520 for a given temperature, then power module 540 shuts off power to GPS receiver 520 for a predetermined amount of time to remove the latched state. That is, overcurrent detector 560 and communications detector 530 send signals (such as a discrete value) to power module 540 indicating a latched or normal condition. Receiving a signal indicative of a latched state from either or both of overcurrent detector 560 and communications detector 530 causes power module 550 to halt power to GPS receiver 520.

By monitoring both the communications between system processor 510 and GPS receiver 520 and the current drawn by GPS receiver 420, system 500 increases the probability of detecting (and correcting) a latched state.

The foregoing disclosure of the preferred embodiments of the present invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto.

## Claims

1. A method for mitigating harmful radiation effects on at least one electrical component, comprising the steps of:
supplying interruptible power (130) to the at least one electrical component (110);
monitoring a first value representative of power drawn by the at least one electrical component (110);
adjusting, according to an operating temperature, the first value by an offset value and generating an adjusted power;
comparing the adjusted value with a threshold value to determine an overcurrent condition (120);
interrupting power to the at least one electrical component (110) when an overcurrent condition exists; and
resupplying power to the electrical component (110) after a predetermined period of time so that the electrical component (110) resumes drawing current at a normal level.

2. The method of claim 1, further comprising:
monitoring communications sent from the electrical component;
interrupting power to the electrical component when the communications cease; and
resupplying power after a predetermined period of time has elapsed to the electrical component so that the electrical component resumes sending communications.

3. The method of claim 1, wherein the electrical component comprises a GPS receiver.

4. The method of claim 1, wherein the electrical component is mounted on an object in outer space.

5. The method of claim 1, wherein a power strobe is used to resupply power.

6. The method of claim 1, wherein a sense resistor and an operational amplifier monitor the first value, a temperature sensor provides the offset value, and a comparator compares the adjusted value with a threshold value.

## Patentansprüche

1. Verfahren zum Mindern schädlicher Strahlungseffekte auf mindestens eine elektrische Komponente, umfassend die Schritte:
Zuführen unterbrechbaren Stroms (130) zu der mindestens einen elektrischen Komponente (110);
Überwachen eines ersten Werts, der von der mindestens einen elektrischen Komponente (110) gezogenen Strom repräsentiert;
Justieren des ersten Werts gemäß einer Arbeitstemperatur um einen Offsetwert und Erzeugen eines justierten Stroms;
Vergleichen des justierten Werts mit einem Schwellwert zum Bestimmen eines Überstromzustands (120);
Unterbrechen von Strom zu der mindestens einen elektrischen Komponente (110), wenn ein Überstromzustand existiert; und
erneutes Liefern von Strom an die elektrische Komponente (110) nach einer vorbestimmten Zeitperiode, so daß die elektrische Komponente (110) das Ziehen eines Stroms auf einem normalen Pegel wiederaufnimmt.

2. Verfahren nach Anspruch 1, weiterhin umfassend:
Überwachen von von der elektrischen Komponente gesendeten Kommunikationen;
Unterbrechen von Strom zu der elektrischen Komponente, wenn die Kommunikationen aufhören; und
erneutes Liefern von Strom, nachdem eine vorbestimmte Zeitperiode verstrichen ist, an die elektrische Komponente, so daß die elektrische Komponente das Senden von Kommunikationen wieder aufnimmt.

3. Verfahren nach Anspruch 1, wobei die elektrische Komponente einen GPS-Empfänger umfaßt.

4. Verfahren nach Anspruch 1, wobei die elektrische Komponente an einem Objekt im äußeren Raum montiert ist.

5. Verfahren nach Anspruch 1, wobei zum erneuten Liefern von Strom ein Stromstrobe verwendet wird.

6. Verfahren nach Anspruch 1, wobei ein Lesewiderstand und ein Operationsverstärker den ersten Wert überwachen, ein Temperatursensor den Offsetwert liefert und ein Vergleicher den justierten Wert mit einem Schwellwert vergleicht.

## Revendications

1. Procédé pour atténuer les effets nuisibles de rayonnements sur au moins un composant électrique, comprenant les étapes de:
fourniture d'une puissance pouvant être interrompue (130) audit au moins un composant électrique (110);
surveillance d'une première valeur représentative de la puissance absorbée par ledit au moins un composant électrique (110);
ajustement, selon une température de fonctionnement, de la première valeur par une valeur de décalage et génération d'une puissance ajustée;
comparaison de la valeur ajustée avec une valeur de seuil pour déterminer une condition de surintensité (120);
interruption de la puissance délivrée audit au moins un composant électrique (110), lorsqu'une condition de surintensité existe; et
rétablissement de la fourniture de la puissance au composant électrique (110) après une période de temps prédéterminée afin que le composant électrique (110) recommence à consommer du courant à un niveau normal.

2. Procédé selon la revendication 1, comprenant en outre:
une surveillance des communications émises à partir du composant électrique;
une interruption de la puissance délivrée au composant électrique lorsque les communications cessent; et
un rétablissement de la fourniture de la puissance au composant électrique après qu'une période de temps prédéterminée s'est écoulée afin que le composant électrique recommence à émettre des communications.

3. Procédé selon la revendication 1, dans lequel le composant électrique comprend un récepteur GPS.

4. Procédé selon la revendication 1, dans lequel le composant électrique est monté sur un objet dans l'espace.

5. Procédé selon la revendication 1, dans lequel un dispositif d'activation de la puissance par impulsion est utilisé pour rétablir la fourniture de la puissance.

6. Procédé selon la revendication 1, dans lequel une résistance de détection et un amplificateur opérationnel surveillent la première valeur, un capteur de température fournit la valeur de décalage, et un comparateur compare la valeur ajustée à une valeur de seuil.
